# EUROPÄISCHE PATENTSCHRIFT

(11) **EP 1 506 352 B1**
(45) Veröffentlichungstag und Bekanntmachung des Hinweises auf die Patenterteilung: **03.05.2006**
(21) Anmeldenummer: 03732368.0
(22) Anmeldetag: 14.05.2003
(51) Int. Cl.: F16D 65/092, F16D 69/04

(54) **BREMSBELAG FÜR EINE SCHEIBENBREMSE EINES FAHRZEUGES**
BRAKE LINING FOR THE DISK BRAKE OF A VEHICLE
GARNITURE DE FREIN POUR UN FREIN A DISQUE D'UN VEHICULE

(30) Priorität: 16.05.2002 DE 10221687; 16.12.2002 DE 10258750
(43) Veröffentlichungstag der Anmeldung: 16.02.2005
(73) Patentinhaber: KNORR-BREMSE Systeme für Schienenfahrzeuge GmbH, 80809 München (DE)
(72) Erfinder: WIRTH, Xaver, 85737 Ismaning (DE)
(86) Internationale Anmeldenummer: PCT/EP2003/005035
(87) Internationale Veröffentlichungsnummer: WO 2003/098068

(56) Entgegenhaltungen:
- EP-A- 0 263 752
- EP-A- 1 167 806
- EP-A- 1 318 321
- DE-A- 4 301 006
- DE-C- 19 709 962
- DE-U- 8 514 607
- US-A- 2 943 713
- US-A- 4 535 874
- US-A- 4 640 390

## Beschreibung

Die vorliegende Erfindung betrifft einen Bremsbelag für eine Schreibenbremse eines Fahrzeuges gemäß dem Oberbegriff des Anspruchs 1.

Für Fahrzeuge, insbesondere Schienenfahrzeugen, die hohe Geschwindigkeiten erreichen, kommen Bremsbeläge zum Einsatz, deren Reibelemente aus einem harten Werkstoff bestehen.

Um ein befriedigendes Tragbild, d. h., eine gleichmäßige Flächenpressung der Reibelemente an der Reibfläche der Bremsscheibe zu erreichen, sind verschiedene konstruktive Lösungen bekannt.

So finden beispielsweise sich an der Rückseite der Trägerplatte abstützende Tellerfedern Verwendung, durch die die angeschlossenen Reibelemente elastisch an der Trägerplatte gelagert sind. Auch werden die Reibelemente bei einer anderen Ausführung elastisch auf Biegefedern geführt, während nach einem weiteren Vorschlag die Reibelemente mit verformbaren Zwischenblechen verbunden sind.

Ein sogenannter Isobar-Bremsbelag ist aus der EP 0 784 761 B1 sowie der DE 197 09 962 C1 bekannt. Dabei weisen die Reibelemente auf ihrer der Trägerplatte zugewandten Seite kugelabschnittförmige Bereiche auf, die in daran angepaßten Kugelpfannen der Trägerplatte einliegen. Im letztgenannten Stand der Technik werden die ansonsten in ihrer Grundfläche sechseckig geformten Reibelemente durch Spannfedern gehalten, die sich an der Rückseite der Trägerplatte abstützen.

Aus der DE 8514607 U ist ein Bremsbelag mit einer mehrteiligen Belagträgervorrichtung bekannt.

Problematisch gestaltet sich bei den bekannten Bremsbelägen die relativ aufwendige und kostenintensive Herstellung bzw. ein trotz der getroffenen konstruktiven Maßnahmen nicht ganz ausreichendes Reibverhalten der Reibelemente infolge eines schlechten Tragbildes.

Der vorliegenden Erfindung liegt daher die Aufgabe zugrunde, einen Bremsbelag der gattungsgemäßen Art so weiterzuentwickeln, daß das Reibverhalten der Reibelemente optimiert und eine kostengünstigere Herstellung möglich ist.

Diese Aufgabe wird durch einen Bremsbelag gelöst, der die Merkmale des Anspruchs 1 oder 2 aufweist.

Die durch die Erfindung gemäß Anspruch 1 erreichte integrierte Formelastizität der Trägerplatte verbessert insgesamt das Tragbild und vermeidet besonders gut sogenannte "hot spots", d. h. eine bereichsweise Überbeanspruchung durch ungleichmäßige Erwärmung.

Nach einer vorteilhaften Weiterbildung dieser Erfindung, wonach entsprechend der DE 197 09 962 C1 die Reibelemente jeweils mittels Spannfedern an der Trägerplatte befestigt sind, wird eine starre, bruchgefährdete Verbindung zwischen beiden Bauteilen verhindert, wie sie etwa bei Vernieten oder Verschweißen gegeben wäre, so daß diese Verbindung eine erhebliche Verbesserung der Betriebssicherheit darstellt.

Dies trifft gleichermaßen auf einen Bremsbelag nach Anspruch 2 zu, bei dem neben der rückseitigen Spannfeder, mit der das jeweilige Reibelement an der Trägerplatte befestigt ist, ein weiteres Federelement zwischen dem Reibelement und der Trägerplatte angeordnet ist, wobei das Federelement vorzugsweise in einer Aufnahme der Trägerplatte einliegt, die auf der dem Reibelement zugewandten Seite eingebracht ist.

Die Aufnahme ist in ihrem Abmaß so gehalten, daß das Federelement mit vorzugsweise rundem Grundriß sowohl axial wie radial gesichert einliegt.

Die Spannfeder wird so unter Vorspannung angebracht, daß das Reibelement ständig, also auch in entlasteter Stellung des Federelementes eingespannt ist.

Die aus Federstahl bestehenden Federelemente besitzen gegenüber der partiellen Verformbarkeit der Trägerplatte entsprechend dem Anspruch 1 eine größere Durchfederung. Bei Verwendung der Federelemente kann die Trägerplatte aus einem preiswerten Gußwerkstoff oder aus Stahlblech mit geringer Festigkeit hergestellt werden, wodurch sich bemerkenswerte Kostenvorteile ergeben.

Hierzu trägt auch bei, daß vom Grundsatz her lediglich wenige unterschiedliche Bauteile vorhanden sind, nämlich die Trägerplatte, die Reibelemente, die Spannfedern und bei einem Bremsbelag gemäß Anspruch 2 die Federelemente. Die einfache Konstruktion erlaubt darüber hinaus, daß die Reibelemente nach einem Verschleiß sehr leicht austauschbar sind, so daß reparaturbedingte Betriebsunterbrechungen außergewöhnlich kurz gehalten werden können.

Der in diesem Sinn modulare Aufbau des Bremsbelages führt überdies dazu, daß die Bauteile Reibelemente und Federn unverändert eingesetzt werden können, so daß vorhandene Teile problemlos verwendbar sind. In der Folge ist lediglich die Trägerplatte entsprechend den Erfindungen zu modifizieren.

Dabei kann prinzipiell die Trägerplatte gemäß Anspruch 1 im Feingußverfahren hergestellt werden, das besonders kostengünstig ist. Neben der Ausbildung als Stahl- oder Aluminium-Gußteil besteht auch die Möglichkeit der Ausführung als Stahlblechtiefziehteil.

Nach einem weiteren Gedanken der Erfindung ist vorgesehen, daß im Bereich der Kugelpfannen der Trägerplatte Radialschlitze eingebracht sind, die den Kugelpfannen eine gewisse Elastizität senkrecht zur Reiboberfläche verleihen. Anstelle von Schlitzen, die sich von der Kugelpfanne zur Rückseite der Trägerplatte durchgängig erstrecken, können auch Nuten vorgesehen sein, durch die ebenfalls die gewünschte Elastizität erzielbar ist

Neben der genannten radialen Anordnung der Schlitze sind auch andere Anordnungen denkbar, wobei die Elastizität in jedem Fall durch eine partielle Materialschwächung der Trägerplatte erreicht wird.

Dies ist auch bei einer Ausführungsvariante der Fall, bei der die Kugelpfanne im Sinne einer Tellerfeder ausgebildet ist, wobei die Materialdicke über den Radius gesehen konstant oder verändert ist.

Anstelle der genannten lokal begrenzten Elastizität der Trägerplatte kann eine lokal unbegrenzte; außerhalb der Kugelpfanne sich ergebende Elastizität vorgesehen sein.

Hierzu besteht die Möglichkeit, die Trägerplatte dünner zu dimensionieren und im Überdeckungsbereich der Reibelemente Erhebungen in Form von Noppen oder dergleichen vorzusehen, die als Abstützung für die Reibelemente dienen.

Durch einen gleichbleibenden oder definiert veränderten Dickenverlauf der Trägerplatte läßt sich so eine mehr oder weniger elastische Verformung im Anlagebereich der Reibelemente herstellen.

Auch definiert angeordnete Schlitze oder Nuten in der Trägerplatte außerhalb der Kugelpfannen ermöglichen eine bestimmte Elastizität in den Abstützbereichen für die Reibelemente.

Eine Weiterentwicklung des Anspruchs 2 sieht vor, daß jedes Federelement als Formfeder ausgebildet ist und eine konzentrisch angeordnete Kugelpfanne aufweist, in der der kugelabschnittförmige Bereich des Elementes einliegt. Durch diesen sozusagen Formschluß wird eine auch radiale Fixierung des Reibelementes erreicht. Diese ist auch dann gegeben, wenn der entsprechende Bereich des Reibelementes nicht kugelabschnittsförmig, sondern konusförmig gestaltet und die Formfeder in ihrem Aufnahmebereich daran angepaßt ist.

Gleichzeitig weist die Formfeder einen Anschlag auf, durch den deren Einfederung begrenzt wird.

Anstelle der Formfeder kann als Federelement eine Tellerfeder eingesetzt werden, wie nach einem weiteren Gedanken der Erfindung vorgesehen. Da hier ein handelsübliches Normteil Verwendung finden kann, stellt diese Variante eine besonders kostengünstige Lösung dar.

Eine Positionierung des Reibelementes wird hier durch die Mittenbohrung der Tellerfeder erreicht, in der entweder der kugelförmige Bereich des Reibelementes oder ein maßlich auf die Innenbohrung abgestimmter, zylindrischer oder konusförmig Ansatz einliegt.

Dabei sich kann der Randbereich der Mittenbohrung in den kugel- oder kegelförmigen Bereich des Reibelementes durch lokale Plastifizierung aufgrund auftretender Anpreßkräfte soweit eindrücken, daß ein maßlich exakter Formschluß und spielfreier Sitz praktisch ohne Bearbeitung erreicht wird.

Zweckmäßigerweise ist der Durchmesser der Aufnahme der Trägerplatte, in der die Tellerfeder einliegt, kleiner als das zugeordnete Abmaß des Reibelementes, so daß der der Aufnahme benachbarte Randbereich der Trägerplatte einen Anschlag bildet, an dem das Reibelement in Endstellung anliegt, so daß die Trägerplatte den Federweg der Tellerfeder begrenzt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel eines Bremsbelages nach Anspruch 1 als Teilausschnitt in einer Rückansicht.
- Figur 2: einen Schnitt durch den Bremsbelag gemäß der Linie II-II in Figur 1,
- Figur 3: einen Teilausschnitt der Trägerplatte nach Figur 1 des Bremsbelages in einer Draufsicht,
- Figuren 4 und 5: jeweils ein weiteres Ausführungsbeispiel des Bremsbelages nach Anspruch 1, ebenfalls als Teilausschnitt in einer rückseitigen Ansicht dargestellt,
- Figur 6: ein Ausführungsbeispiel eines Bremsbelages nach Anspruch 2 als Teilausschnitt in einer Rückansicht,
- Figur 7: einen Schnitt durch den Bremsbelag gemäß der Linie VII-VII in Figur 6,
- Figur 8: einen Schnitt durch den Bremsbelag gemäß der Linie VIII-VIII in Figur 6,
- Figur 9: ein weiteres Ausführungsbeispiel des Bremsbelages nach Anspruch 2 in einem Teilschnitt, entsprechend der Schnittdarstellung in Figur 8.

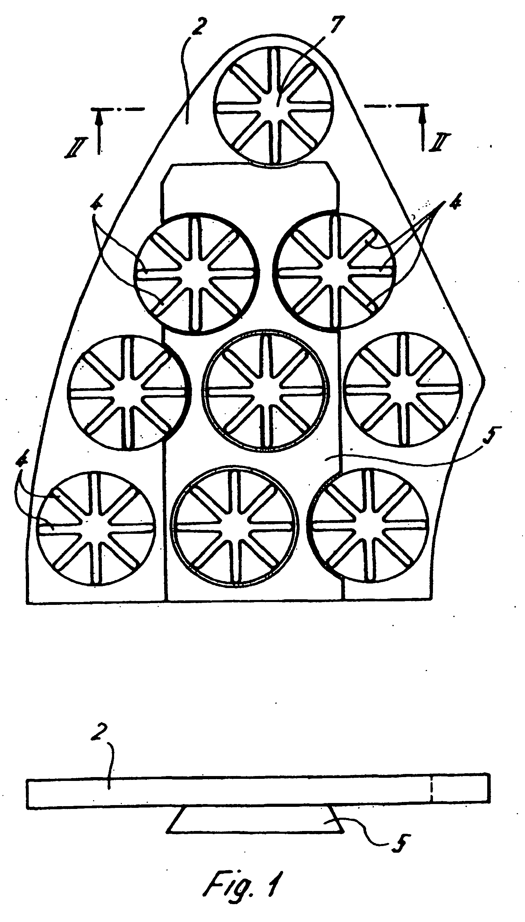

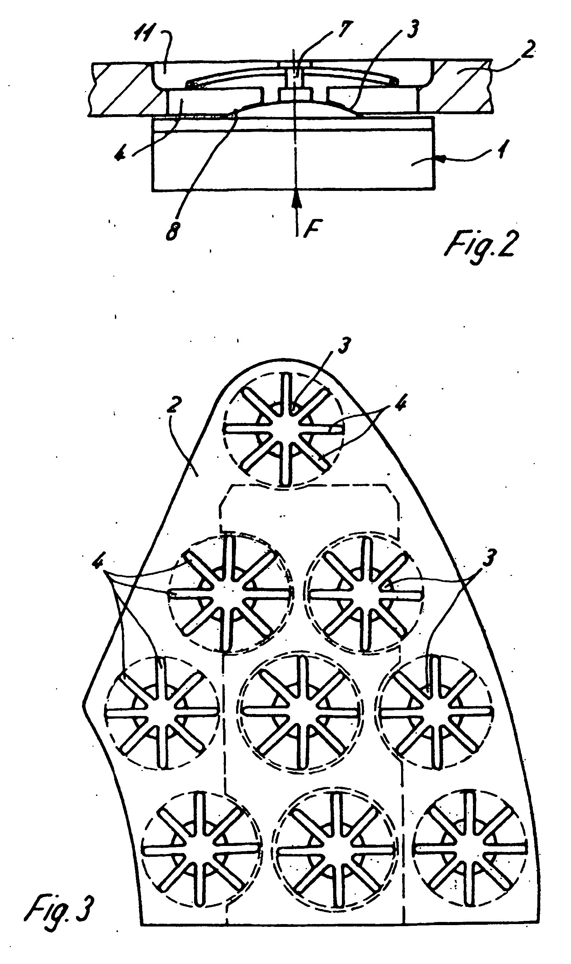

In der Figur 1 ist ein Bremsbelag für eine Scheibenbremse eines Fahrzeuges, insbesondere eines Schienenfahrzeuges, dargestellt, der eine Trägerplatte 2 aufweist, an der mehrere Reibelemente 1 (Figur 2) aus einem Reibmaterial auf einem Trägerblech befestigt sind, die bei Bremsbetätigung an die Reibfläche einer nicht dargestellten Bremsscheibe anpreßbar sind.

Wie besonders deutlich in der Figur 2 erkennbar ist, weisen die Reibelemente 1 auf ihrer der Trägerplatte 2 zugewandten Seite einen kugelabschnittsförmigen Bereich 8 auf, der in einer daran angepaßten in der Trägerplatte 2 vorgesehenen Kugelpfanne 3 einliegt.

In axialer Verlängerung ist an den kugelabschnittsförmigen Bereich 8 ein Haltezapfen 7 angeformt, in den eine ringförmige Spannfeder 6 eingreift, die sich am Grund einer rückseitigen Ausnehmung 11 der Trägerplatte 2 abstützt.

Wie weiter aus der Figur 1, aber auch aus der Figur 2 erkennbar ist, sind in der Trägerplatte 2 im Überdeckungsbereich der Reibelemente 1 radial angeordnete Schlitze 4 vorgesehen, die sich in den Bereich der Kugelpfanne 3 erstrecken, wodurch die Trägerplatte 2 in dem dadurch definierten Bereich partiell elastisch verformbar ist.

Durch die radiale Anordnung der Schlitze 4 bilden sich zwischen jeweils zwei Schlitzen 4 dreieckförmige Stege, in deren Spitzenbereich der kugelabschnittsförmige Bereich 8 des Reibelementes 1 aufliegt. Die bei einer Bremsbetätigung wirksam werdende Reaktionskraft F kann dabei innerhalb des Elastizitätsbereiches die genannten Spitzen verformen.

In der Figur 1 ist als Querschnittsdarstellung erkennbar, daß an der Rückseite der Trägerplatte 2 eine Führungsleiste 5 einer Schwalbenschwanzführung vorgesehen ist, mit der der Bremsbelag formschlüssig an einem ortsfesten Bauteil des Fahrzeuges halterbar ist.

In der Figur 3 ist ausschließlich die Trägerplatte 2 mit den vorgesehenen Ausnehmungen, also den radialen Schlitzen 4 sowie in den Kugelpfannen 3 dargestellt, während auf die Darstellung der Reibelemente hier verzichtet ist.

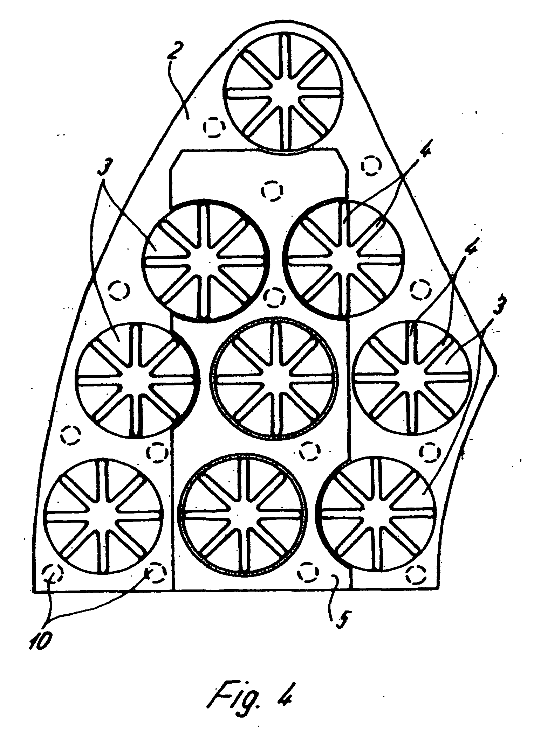

Bei dem in der Figur 4 gezeigten Beispiel ist die Trägerplatte 2 in ihrer Dicke geringer dimensioniert.

Im Überdeckungsbereich der Reibelemente 1 sind auf der Trägerplatte 2 hervorstehende Noppen 10 angeordnet, an denen die Reibelemente anliegen. Die partiell elastische Verformbarkeit wird hierbei durch die Noppen 10 im Zusammenspiel mit der in ihrer Dicke geringer dimensionierten Trägerplatte bewirkt. Dabei kann die Dicke der Trägerplatte 2 konstant sein, aber auch definiert unterschiedlich, wodurch sich eine genau bestimmbare elastische Verformung ergibt.

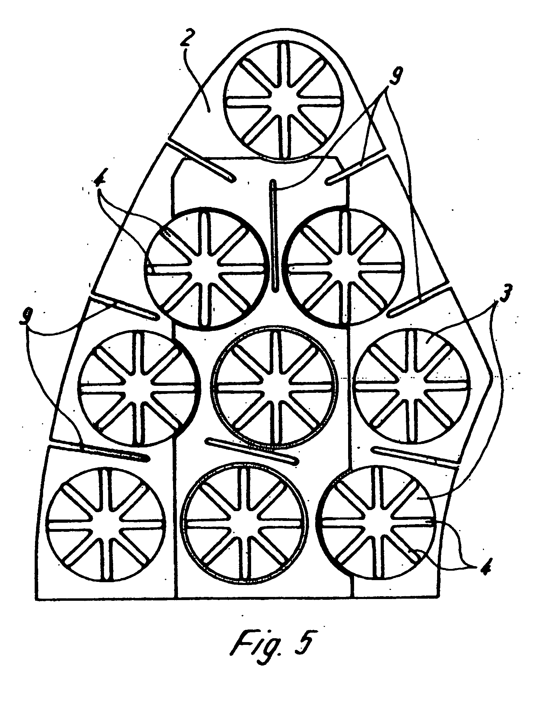

Eine ebenfalls lokal unbegrenzte Elastizität der Trägerplatte 2 ist durch das Ausfiihrungsbeispiel gemäß Figur 5 erzielbar. Dabei sind in die Trägerplatte 2 definiert angeordnete Schlitze eingebracht, die eine entsprechende Auslenkung der Reibelemente bei Belastung ermöglichen.

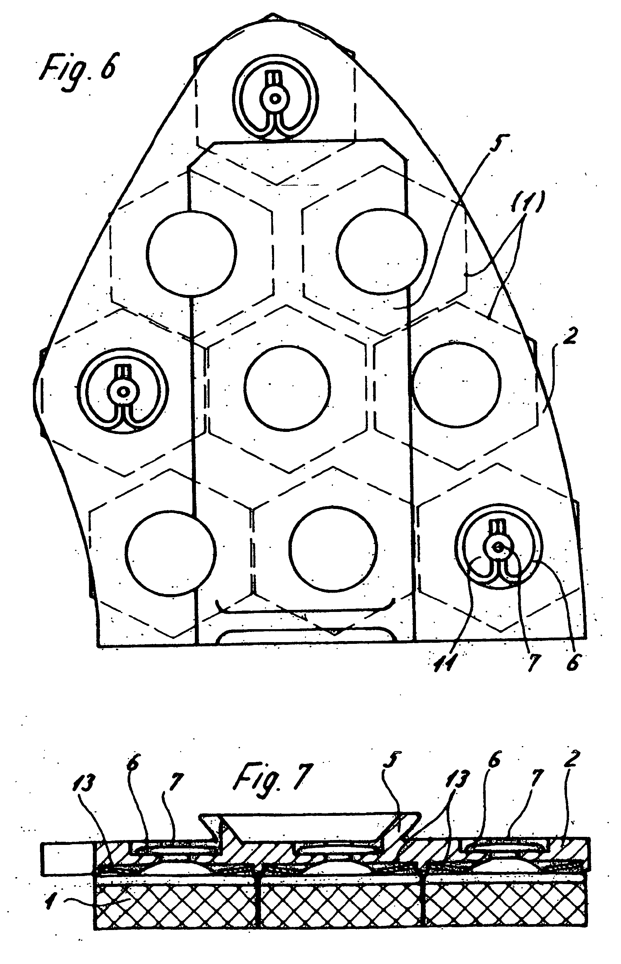

In der Figur 6 ist ein Bremsbelag gemäß Anspruch 2 dargestellt, der in seinem Grundaufbau dem entspricht, wie er in den Figuren 1 und 2 gezeigt ist.

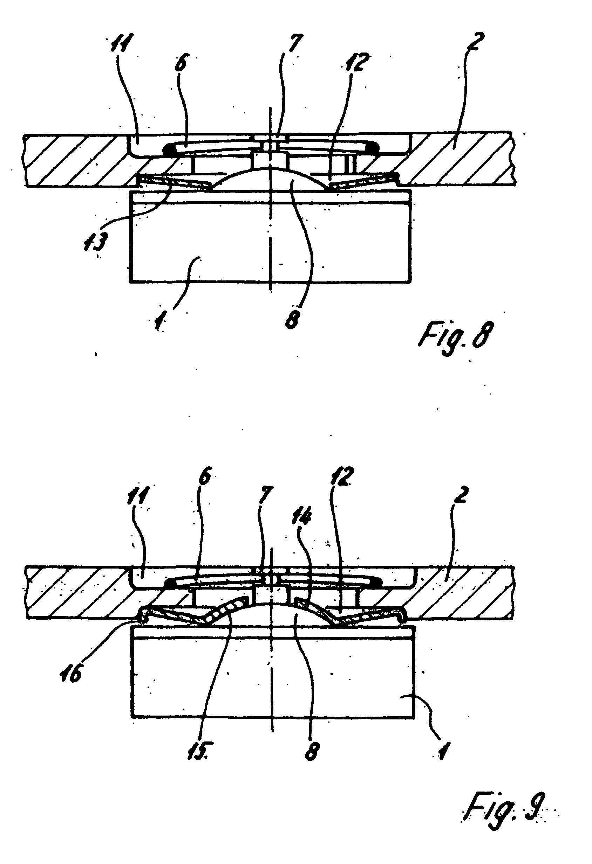

Demgegenüber weist die Trägerplatte 2 jedoch keine partiell elastisch verformbaren Bereiche auf, sondern jedem Reibelement 1 zugeordnet eine Aufnahme 12, in der ein Federelement 13, 14 (Figur 8 und Figur 9) einliegt, das sich einerseits am Grund der Aufnahme 12 und andererseits am zugeordneten Reibelement 1 abstützt.

Bei dem in den Figuren 7 und 8 gezeigten Ausführungsbeispiel ist das Federelement 13 als Tellerfeder ausgebildet, die mit dem Rand seiner Innenbohrung am Reibelement 1 anliegt.

Dabei ist die Tiefe der Aufnahme 12 geringer als die Höhe der entlasteten Tellerfeder, so daß das Reibelement 1 mit geringem Abstand zur Trägerplatte 2 verläuft.

Gleichzeitig ist das Grundrißabmaß der Aufnahme 12 kleiner als das des Reibelementes 1, so daß der sich an die Aufnahme 12 anschließende Randbereich der Trägerplatte 2 einen Anschlag für das Reibelement 1 beim Andrücken in Richtung der Trägerplatte 2 bildet.

Der lichte Durchmesser der Tellerfeder 13 entspricht etwa dem Durchmesser des kugelabschnittsförmigen Bereiches 8 dort, wo dieser sich an das Reibelement 1 im übrigen anschließt. Dadurch wird eine radiale Fixierung des Reibelementes 1 erreicht.

Der Federhub der Spannfeder 6 ist größer als der begrenzte Hub des Reibelementes 1, so daß dies selbst bei vollständiger Anlage an der Trägerplatte 2 unter Federspannung liegt.

In der Figur 9 ist das Federelement 14 in Form einer Formfeder dargestellt, die eine konzentrisch angeordnete kalottenartige Vertiefung 15 aufweist, in der der kugelabschnittsförmige Bereich 8 des Reibelementes 1 zentriert einliegt.

Da die Formfeder 14 mit ihrem die Vertiefung 15 begrenzenden Randbereich an der Rückseite des Reibelementes 1 anliegt, ist durch die Vertiefung 15 neben einer Zentrierung auch eine radiale Fixierung des Reibelementes 1 gewährleistet.

Der Außendurchmesser der Formfeder 14 entspricht ebenso wie der der Tellerfeder 12 dem Außendurchmesser der Aufnahme 12, so daß sowohl die Tellerfeder 13 wie auch die Formfeder 14 gesichert einliegen.

Darüber hinaus ist an die Formfeder 14 umlaufend ein sich axial in Richtung des Reibelementes 1 erstreckender Kragen 16 vorgesehen, der mit einem bestimmten Abstand zur Rückseite des Reibelementes verläuft und einen Anschlag für den Federhub der Formfeder 15 beim betriebsbedingten Eindrücken bildet.

### Bezugszeichenliste

- 1: Reibelement
- 2: Trägerplatte
- 3: Kugelpfanne
- 4: Schlitze
- 5: Führungsleiste
- 6: Spannfeder
- 7: Haltezapfen
- 8: kugelabschnittsförmiger Bereich
- 9: Schlitze
- 10: Noppen
- 11: Ausnehmung
- 12: Aufnahme
- 13: Federelement
- 14: Federelement
- 15: Vertiefung
- 16: Kragen

## Patentansprüche

1. Bremsbelag für eine Scheibenbremse eines Fahrzeuges, insbesondere eines Schienenfahrzeuges, mit einer Trägerplatte (2), an der mehrere, bei Bremsbetätigung an die Reibfläche einer Bremsscheibe anpressbare Reibelemente (1) jeweils mittels einer angeschlossenen Spannfeder (6) befestigt sind, wobei sich die Spannfeder (6) an der den Reibelementen (1) abgewandten Rückseite der Trägerplatte (2) abstützen, **dadurch gekennzeichnet, dass** die Trägerplatte (2) im Überdeckungsbereich der Reibelemente (1) partiell formelastisch verformbar ist.

2. Bremsbelag nach dem Oberbegriff des Anspruches 1, **dadurch gekennzeichnet, dass** jedem Reibelement (1) ein Federelement (13, 14) zugeordnet ist, das sich einerseits am Rücken des Reibelementes (1) und andererseits an der Trägerplatte (2), an deren dem Reibelement zugewandten Seite abstützt, und eine radiale Fixierung des Reibelementes (1) bildet.

3. Bremsbelag nach Anspruch 1, **dadurch gekennzeichnet, daß** zur elastischen Verformbarkeit in die Trägerplatte (2) definiert eingebrachte Schlitze (4, 9) oder Nuten vorgesehen sind.

4. Bremsbelag nach Anspruch 3, bei dem jedes Reibelement (1) in einer Kugelpfanne (3) der Trägerplatte (2) einliegt, **dadurch gekennzeichnet, daß** die Schlitze (4) radial verlaufend in der Kugelpfanne (3) angeordnet sind.

5. Bremsbelag nach Anspruch 1, bei dem jedes Reibelement (1) in einer in der Trägerplatte (2) vorgesehenen Kugelpfanne (3) einliegt, **dadurch gekennzeichnet, daß** die Kugelpfanne (3) zumindest bereichsweise als Tellerfeder ausgebildet ist.

6. Bremsbelag nach einem der Ansprüche 1 oder 3 bis 5, **dadurch gekennzeichnet, daß** die Dicke der durch jeweils zwei Schlitze (4) begrenzten, Stege bildenden Bereiche über den Radius konstant oder unterschiedlich ist.

7. Bremsbelag nach Anspruch 4, **dadurch gekennzeichnet, daß** die in der Kugelpfanne (3) vorgesehenen Schlitze parallel zueinander angeordnet sind.

8. Bremsbelag nach Anspruch 1, **dadurch gekennzeichnet, daß** im Überdeckungsbereich der Reibelemente (1) partielle Verdickungen vorgesehen sind, an denen die Reibelemente (1) anliegen.

9. Bremsbelag nach Anspruch 8, **dadurch gekennzeichnet, daß** die Verdickungen als Noppen (10) ausgebildet sind.

10. Bremsbelag nach Anspruch 7, **dadurch gekennzeichnet, daß** die Dicke der Trägerplatte (2) insgesamt gleich oder definiert unterschiedlich ist.

11. Bremsbelag nach Anspruch 1, **dadurch gekennzeichnet, daß** außerhalb des Überdeckungsbereiches des Reibelementes (1) definiert angeordnete Schlitze (9) in der Trägerplatte (2) vorgesehen sind.

12. Bremsbelag nach Anspruch 2, **dadurch gekennzeichnet, daß** jedes Federelement (13, 14) in einer in der Trägerplatte (2) vorgesehenen Aufnahme (12) einliegt.

13. Bremsbelag nach Anspruch 2, **dadurch gekennzeichnet, daß** das Federelement (13) als Tellerfeder ausgebildet ist.

14. Bremsbelag nach Anspruch 13, **dadurch gekennzeichnet, daß** die Tellerfeder (13) mit ihrem die Innenbohrung begrenzenden Rand an dem Reibelement (1) anliegt.

15. Bremsbelag nach Anspruch 13, **dadurch gekennzeichnet, daß** die Tiefe der Aufnahme (12) kleiner ist als die Höhe der unbelasteten Tellerfeder (13).

16. Bremsbelag nach Anspruch 13, **dadurch gekennzeichnet, daß** der lichte Durchmesser der Tellerfeder (13) etwa dem größten Außendurchmesser eines Ansatzes des Reibelementes (1), vorzugsweise in Form eines kugelabschnittsförmigen Bereiches (8), eines zylindrischen oder konusförmigen Ansatzes entspricht.

17. Bremsbelag nach Anspruch 12 oder 13, **dadurch gekennzeichnet, daß** der Au-Bendurchmesser der Aufnahme (12) kleiner ist als das größte Grundrißabmaß des Reibelementes (1).

18. Bremsbelag nach Anspruch 2, **dadurch gekennzeichnet, daß** das Federelement (14) als Formfeder ausgebildet ist; in der das Reibelement (1) rückseitig radial fixiert einliegt.

19. Bremsbelag nach Anspruch 18, **dadurch gekennzeichnet, daß** die Fonnfeder (14) eine Vertiefung (15) aufweist, in der ein daran angepaßter Ansatz des Reibelementes (1) einliegt.

20. Bremsbelag nach Anspruch 19, **dadurch gekennzeichnet, daß** die Vertiefung (15) kalottenförmig oder konisch ausgebildet ist.

21. Bremsbelag nach Anspruch 19 oder 20, **dadurch gekennzeichnet, daß** der die Vertiefung (15) begrenzende Randbereich der Formfeder (14) am Reibelement (1) anliegt.

22. Bremsbelag nach Anspruch 18, **dadurch gekennzeichnet, daß** die Formfeder (14) einen sich axial erstreckenden, umfänglichen Kragen (16) aufweist, der geringfügig über die Trägerplatte (2) auf der dem Reibelement (1) zugewandten Seite vorsteht.

23. Bremsbelag nach Anspruch 21 oder 22, **dadurch gekennzeichnet, daß** der die Vertiefung (15) begrenzende Randbereich, bezogen auf den Grund der Aufnahme (12) höher ist als der Kragen (16).

24. Bremsbelag nach Anspruch 12 und 18, **dadurch gekennzeichnet, daß** der Durchmesser der Aufnahme (12) dem Außendurchmesser der Formfeder (14) entspricht.

25. Bremsbelag nach Anspruch 24, **dadurch gekennzeichnet, daß** das äußere Grundrißabmaß der Formfeder (14) kleiner ist als das größte Grundrißabmaß des Reibelementes (1).

26. Bremsbelag nach Anspruch 2, **dadurch gekennzeichnet, daß** die Federelemente (13, 14) aus Federblech bestehen.

27. Bremsbelag nach Anspruch 1 oder 2, **dadurch gekennzeichnet, daß** die Trägerplatte (2) aus einem Gußwerkstoff, insbesondere einem Feinguß, vorzugsweise Stahl- oder Aluminiumguß, besteht.

28. Bremsbelag nach Anspruch 1 oder 2, **dadurch gekennzeichnet, daß** die Trägerplatte (2) aus Stahlblech besteht.

29. Bremsbelag nach Anspruch 1 oder 28, **dadurch gekennzeichnet, daß** die Trägerplatte (2) als Stahlblech-Tiefziehteil ausgebildet ist.

## Revendications

1. Garniture d'un frein à disque d'un véhicule automobile, notamment d'un véhicule ferroviaire, comprenant une plaque (2) de support à laquelle sont fixés, respectivement, au moyen d'un ressort (6) de blocage raccordé, plusieurs éléments (1) de frottement pouvant être appliqués lors de l'actionnement du frein sur la surface de frottement d'un disque de frein, les ressorts (6) de blocage s'appuyant sur la face arrière, éloignée des éléments (1) de frottement, de la plaque (2) de support, **caractérisée en ce que** la plaque (2) de support peut, dans la partie de recouvrement des éléments (1) de frottement, être partiellement déformable par élasticité de forme.

2. Garniture de frein suivant le préambule de la revendication 1, **caractérisée en ce qu'**il est associé à chaque élément (1) de frottement un élément (13, 14) de ressort qui s'appuie, d'une part, sur le dos de l'élément (1) de frottement et, d'autre part, sur la plaque (2) de support et donne une immobilisation radiale de l'élément (1) de frottement.

3. Garniture de frein suivant la revendication 1, **caractérisée en que** pour la déformabilité élastique il est prévu, dans la plaque (2) de support, des fentes (4, 9) ou des rainures ménagées de manière définie.

4. Garniture de frein suivant la revendication 3, dans laquelle chaque élément (1) de frottement est inséré dans une cuvette (3) sphérique de la plaque (2) de support, **caractérisée en ce que** les fentes (4) sont disposées en s'étendant radialement dans la cuvette (3) sphérique.

5. Garniture de frein suivant la revendication 1, dans laquelle chaque élément (1) de frottement est inséré dans une cuvette (3) sphérique prévue dans la plaque (2) de support, **caractérisée en ce que** la cuvette (3) sphérique est constituée au moins par parties sous la forme de ressorts à disque.

6. Garniture de frein suivant l'une des revendications 1, ou 3 à 5, **caractérisée en ce que** l'épaisseur des parties formant des nervures délimitées par deux fentes (4) est constante ou est différente sur le rayon.

7. Garniture de frein suivant la revendication 4, **caractérisée en ce que** les fentes prévues dans la cuvette (3) sphérique sont parallèles entre elles.

8. Garniture de frein suivant la revendication 1, **caractérisée en ce qu'**il est prévu dans la zone de recouvrement des éléments (1) de frottement des épaississements partiels sur lesquels s'appliquent les éléments (1) de frottement.

9. Garniture de frein suivant la revendication 8, **caractérisée en ce que** les épaississements sont constitués sous la forme de bossages.

10. Garniture de frein suivant la revendication 7, **caractérisée en ce que** l'épaisseur de la plaque (2) de support est dans l'ensemble la même ou est différente de manière définie.

11. Garniture de frein suivant la revendication 1, **caractérisée en ce qu'**il est prévu à l'extérieur de la zone de recouvrement de l'élément (1) de frottement des fentes (9) disposées de manière définie par la plaque (2) de support.

12. Garniture de frein suivant la revendication 2, **caractérisée en ce que** chaque élément (13, 14) à ressort est inséré dans un logement (12) prévu dans la plaque (2) de support.

13. Garniture de frein suivant la revendication 2, **caractérisée en ce que** l'élément (13) ressort est constitué en ressort à disque.

14. Garniture de frein suivant la revendication 13, **caractérisée en ce que** le ressort (13) à disque s'applique par son bord délimitant le trou intérieur à l'élément (1) de frottement.

15. Garniture de frein suivant la revendication 13, **caractérisée en ce que** la profondeur du logement (12) est plus petite que la hauteur du ressort (13) à disque non chargé.

16. Garniture de frein suivant la revendication 13, **caractérisée en ce que** le diamètre intérieur du ressort (13) disque correspond à peu près au plus grand diamètre extérieur d'un prolongement de l'élément (1) de frottement, de préférence sous la forme d'une zone (8) en forme de calotte sphérique, d'un prolongement cylindrique ou conique.

17. Garniture de frein suivant la revendication 12 ou 13, **caractérisée en ce que** le diamètre extérieur du logement (12) est plus petit que la dimension en projection verticale la plus grande de l'élément (1) de frottement.

18. Garniture de frein suivant la revendication 2, **caractérisée en ce que** l'élément (14) à ressort est constitué sous la forme d'un ressort de forme dans lequel l'élément (1) de frottement est inséré en étant immobilisé radialement du côté arrière.

19. Garniture de frein suivant la revendication 18, **caractérisée en ce que** le ressort (14) de forme a une cavité (15) dans laquelle est inséré un prolongement qui y est adapté de l'élément (1) de frottement.

20. Garniture de frein suivant la revendication 19, **caractérisée en ce que** la cavité (15) est en forme de calotte ou est conique.

21. Garniture de frein suivant la revendication 19 ou 20, **caractérisée en ce que** la partie de bord délimitant la cavité (15) du ressort (14) de forme s'applique à l'élément (1) de frottement.

22. Garniture de frein suivant la revendication 18, **caractérisée en ce que** le ressort (14) de forme a un collet (16) faisant le tour et s'étendant axialement, qui est légèrement en saillie de la plaque (2) de support du côté tourné vers l'élément (1) de frottement.

23. Garniture de frein suivant la revendication 21 ou 22, **caractérisée en ce que** la partie de bord délimitant la cavité (15) est, rapportée au fond du logement (12), plus haute que le collet (16).

24. Garniture de frein suivant la revendication 12 et 18, **caractérisée en ce que** le diamètre du logement (12) correspond au diamètre extérieur du ressort (14) de forme.

25. Garniture de frein suivant la revendication 24, **caractérisée en ce que** la dimension extérieure en projection verticale du ressort (14) de forme est inférieure à la dimension la plus grande en projection verticale de l'élément (1) de frottement.

26. Garniture de frein suivant la revendication 2, **caractérisée en ce que** l'élément (13, 14) de ressort est constitué d'une tôle pour ressort.

27. Garniture de frein suivant la revendication 1 ou 2, **caractérisée en ce que** la plaque (2) de support est en un matériau coulé, notamment en une pièce coulée de précision, de préférence en une pièce coulée en acier ou en aluminium.

28. Garniture de frein suivant la revendication 1 ou 2, **caractérisée en ce que** la plaque (2) de support est en une tôle d'acier.

29. Garniture de frein suivant la revendication 1 ou 28, **caractérisée en ce que** la plaque (2) de support est constituée d'une pièce à emboutissage profond en tôle d'acier.

## Claims

1. Brake lining for a disc brake of a vehicle, in particular a railway vehicle, with a carrier plate (2) on which several friction elements (1) that can be pressed against the friction surface of a brake disc when the brake is actuated are attached by means of a connected tension spring (6), the tension spring (6) resting on the rear side of the carrier plate (2) facing away from the friction elements (1), **characterised in that** in the area covered by the friction elements (1) the carrier plate (2) can partially be elastically deformed.

2. Brake lining according to the preamble of Claim 1, **characterised in that** each friction element (1) is associated with a spring element (13, 14), which rests on one side against the back of the friction element (1) and on the other side against the carrier plate (2) on its side facing the friction element, and forms a radial attachment of the friction element (1).

3. Brake lining according to Claim 1, **characterised in that** to produce the elastic deformability, defined slits (4, 9) or grooves are provided in the carrier plate (2).

4. Brake lining according to Claim 3, in which each friction element rests in a ball cup (3) of the carrier plate (2), **characterised in that** the slits (4) are arranged radially in the ball cup (3).

5. Brake lining according to Claim 1, in which each friction element (1) rests in a ball cup (3) provided in the carrier plate (2), **characterised in that** at least in some areas the ball cup (3) is formed as a cup spring.

6. Brake lining according to any of Claims 1 or 3 to 5, **characterised in that** the thickness of the areas forming webs delimited each by a pair of slits (4) is constant or different along the radius.

7. Brake lining according to Claim 4, **characterised in that** the slits provided in the ball cup (3) are arranged parallel to one another.

8. Brake lining according to Claim 1, **characterised in that** partial thicker areas are provided in the area covered by the friction elements (1), against which the friction elements (1) rest.

9. Brake lining according to Claim 8, **characterised in that** the thickened areas are formed as humps (10).

10. Brake lining according to Claim 7, **characterised in that** the thickness of the carrier plate (2) as a whole is equal or varies in a defined way.

11. Brake lining according to Claim 1, **characterised in that** slits (9) arranged in a defined manner are provided in the areas covered by the friction elements (1).

12. Brake lining according to Claim 2, **characterised in that** each spring element (13, 14) rests in a holding recess (12) provided in the carrier plate (2).

13. Brake lining according to Claim 2, **characterised in that** the spring element (13) is made as a cup spring.

14. Brake lining according to Claim 13, **characterised in that** the cup spring (13) rests against the friction element (1) on its rim delimiting the inside hole

15. Brake lining according to Claim 13, **characterised in that** the depth of the holding recess (12) is smaller than the height of the unloaded cup spring (13).

16. Brake lining according to Claim 13, **characterised in that** the clear diameter of the cup spring (13) corresponds approximately to the maximum outer diameter of a rim of the friction element (1), preferably in the form of a ball-section shaped area (8) of a cylindrical or cone-shaped attachment.

17. Brake lining according to Claims 12 or 13, **characterised in that** the outer diameter of the holding recess (12) is smaller than the maximum footprint dimension of the friction element (1).

18. Brake lining according to Claim 2, **characterised in that** the spring element (14) is formed as a shaped spring in which the friction element (1) rests radially fixed on the rear side.

19. Brake lining according to Claim 18, **characterised in that** the shaped spring (14) has a recess (15) into which an attachment of the friction element (1) adapted thereto fits.

20. Brake lining according to Claim 19, **characterised in that** the recess (15) is cup-shaped or conical.

21. Brake lining according to Claims 19 or 20, **characterised in that** the edge area delimiting the recess (15) of the shaped spring (14) rests against the friction element (1).

22. Brake lining according to Claim 18, **characterised in that** the shaped spring (14) has an axially extending, circumferential collar (16), which projects slightly over the carrier plate (2) on the side facing the friction element (1).

23. Brake lining according to Claims 21 or 22, **characterised in that** relative to the base of the holding recess (12), the edge area delimiting the recess (15) is higher than the collar (16).

24. Brake lining according to Claims 12 and 18, **characterised in that** the diameter of the holding recess (12) corresponds to the outer diameter of the shaped spring (14).

25. Brake lining according to Claim 24, **characterised in that** the outer footprint dimension of the shaped spring (14) is smaller than the maximum footprint dimension of the friction element (1).

26. Brake lining according to Claim 2, **characterised in that** the spring elements (13, 14) consist of spring sheet

27. Brake lining according to Claims 1 or 2, **characterised in that** the carrier plate (2) consists of a cast material, in particular a precision casting preferably of steel or aluminium.

28. Brake lining according to Claims 1 or 2, **characterised in that** the carrier plate (2) consists of steel sheet.

29. Brake lining according to Claims 1 or 28, **characterised in that** the carrier plate (2) is formed as a deep-drawn steel sheet component
